# EUROPEAN PATENT SPECIFICATION

(11) **EP 2 173 110 B1**
(45) Date of publication and mention of the grant of the patent: **22.06.2016**
(21) Application number: 07855790.7
(22) Date of filing: 25.12.2007
(51) Int. Cl.: H04W 76/02, H04W 76/06

(54) **A REALIZING METHOD FOR RE-ANSWERING CALL**
REALISIERUNGSVERFAHREN ZUR NEUENTGEGENNAHME EINES ANRUFS
PROCÉDÉ DE RÉALISATION POUR UN APPEL DE NOUVELLE RÉPONSE

(30) Priority: 10.05.2007 CN 200710106821
(43) Date of publication of application: 07.04.2010
(73) Proprietor: ZTE Corporation, Shenzhen, Guangdong 518057 (CN)
(72) Inventor: QIAN, Pengqing, Guangdong 518057 (CN); LI, Liling, Guangdong 518057 (CN)
(74) Representative: Ilgart, Jean-Christophe
(86) International application number: PCT/CN2007/003785
(87) International publication number: WO 2008/138187

(56) References cited:
- EP-A1- 1 744 530
- CN-A- 1 324 546
- CN-A- 1 794 665
- CN-A- 1 870 826
- CN-A- 1 870 827
- US-A- 4 568 800
- US-A1- 2002 090 947
- US-B2- 7 103 002

## Description

### Field of the Invention

The invention relates to the communication field, in particular to a method for realizing re-answer call.

### Background of the Invention

The media gateway control protocol H.248, one of the interface protocols of the next generation network (NGN), is employed on the control interfaces that are generated when the media processing is separated from signaling control in NGN and used for the communication between media gateway control equipment (media gateway controller/soft switch equipment) and corresponding media processing equipment (gateway/media server/IP intelligent terminal etc), for instance, such protocol is employed between a media gateway controller (MGC) and a media gateway (MGW).

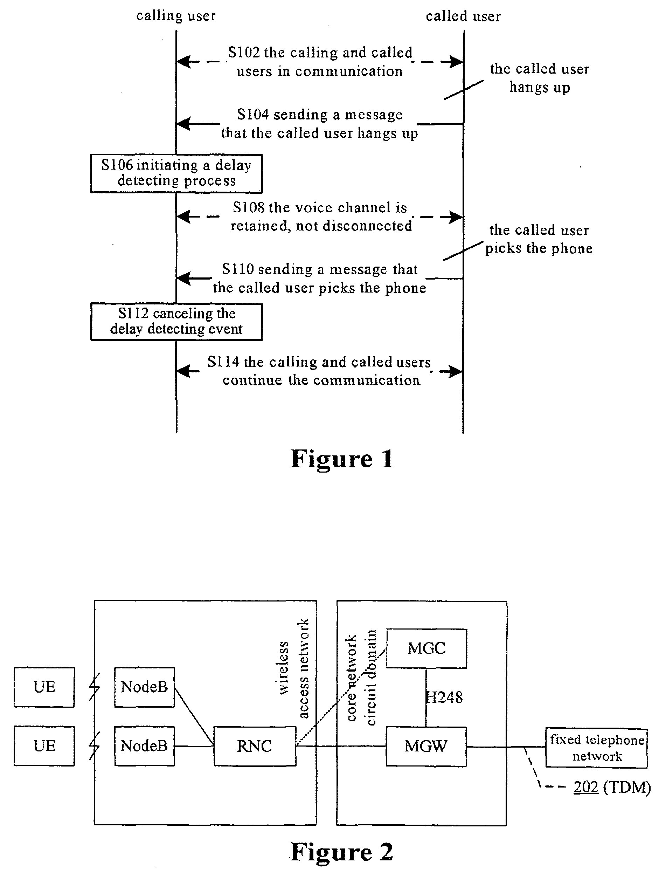

The re-answer call is mainly used in the fixed telephone network (e.g. public switched telephone network, PSTN for short). This involves a calling technology which is employed when calling and called users are in communication, belonging to a prior art of a fixed network, with the processing shown in Figure 1:
S102, after performing a series of callings, the calling and called users are in communication. which is the precondition for realizing a re-answer call;
S104, when the called user hangs up, a message that includes the hang-up information is sent to the calling side;
S106, the calling user initiates a delay detecting event, waiting the calling user hangs up;
S108, during the delay detecting event, the voice channel between the calling and called users is retained;
S110, during the delay detecting duration, if the called user picks the phone again, a message including the information that the called user picks the phone and re-answers it is sent to the calling side;
S112, the calling user cancels the preceding delay detecting event;
S114, the calling and called users can continue the communication again.

The function, which is not necessary for a calling process, can be initiated by configuring data to select whether to initiate the function. A typical method for the fixed network is to set the restoration control of the calling as the calling user control.

Figure 2 is a schematic networking drawing when a fixed network accesses to the circuit domain of a core NGN network. In the Figure, 202 represents the signaling link between the fixed network and media processing equipment, which is mainly TDM type bearing. The signaling message from the fixed network is first processed by the media processing equipment and then reported to the media gateway control equipment. When using the TDM type bearing, there are two kinds of signaling modes: common channel signaling and channel associated signaling.

A common channel signaling protocol often carries with relatively rich calling information. Generally speaking, all the existing protocols (e.g. Signaling System No. 7) support a re-answer signal. Therefore, the calling information from the fixed network can be directly transferred to the media gateway control equipment via the media processing equipment.

The calling information carried by the channel associated signaling is generally relative simple. Furthermore, most of the information needs to be conversed by the media processing equipment into the corresponding interface message which is then reported to the media gateway control equipment. In the prior art of the networking method, no solution has been developed for transferring between the media gateway control equipment and the media processing equipment the information related to the re-answer call. Therefore, a fixed network user, when being called by a mobile user of NGN, cannot use the re-answering functions (if any exists previously).

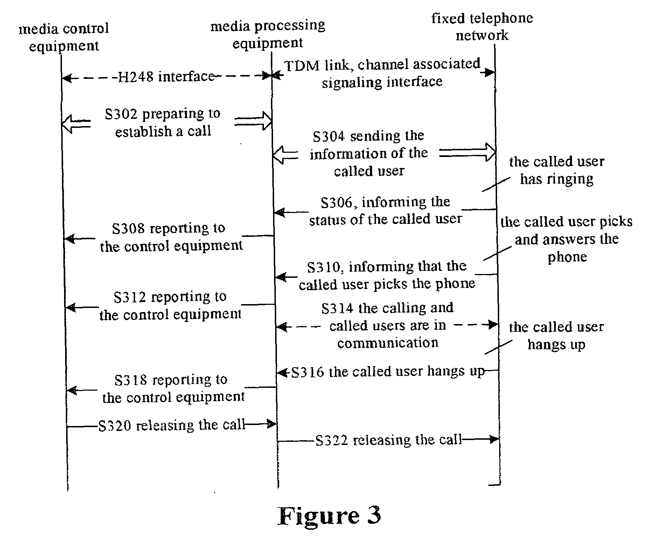

Figure 3 shows a basic calling flow of fixed network side when a channel associated signaling is employed between the fixed network and the media processing equipment. As shown in Fig 3, the flow includes the following steps:
S302, when preparing to establish a calling, some information, such as preparing a calling resource, storing the information of the calling and called users and so on, is exchanged between the media gateway control equipment and the media processing equipment;
S304, after receiving enough calling information from the media gateway control equipment, the media processing equipment exchanges the user information with the fixed network, mainly including the called user number, probably the type and number information of the calling user, the calling user number etc;
S306, through analysis and processing, the fixed network finds the idle called user and reports it to the media processing equipment;
S308, the media processing equipment sends a message to the media gateway control equipment with the message including the related information of indicating the called user is idle. Then, the calling user can hear a related cue tone (such as ring back tone etc).
S310, after detecting the called user picks and answers the phone, the fixed network sends to the media processing equipment a message that the called user picks the phone;
S312, the media processing equipment sends to the media gateway control equipment a message including the related information that the called user answers the phone, then the called user stops hearing the cue tone;
S314, the calling user is in communication with the called user.
S316, the fixed network, detecting that the called user hangs up, sends to the media processing equipment a message indicating the called user hangs up.
S318, the media processing equipment sends to the media gateway contrd equipment a message including the related information indicating that the called user hangs up and finishes the calling.
S320, the media gateway control equipment informs the media processing equipment to release the present calling.
S322, the media processing equipment then releases the resources related to the present calling and informs the fixed network that the calling has been released and the circuit that is previously occupied can take part in a next calling.

Consequently, there is a need for a method for realizing between a fixed network and the media processing equipment of NGN network the re-answer call, employing the TDM link and channel associated protocol to carry out the voice call.

CN1870826A discloses a control system and method for call releasing. EP1744530 discloses a device and a method allowing to successively use several terminal devices in a same voice communication.

### Summary of the Invention

In view of the one or more problems, the present invention provides a new method for realizing a re-answer call.

The method for realizing a re-answer call according to the present invention includes the following steps: S402, the calling user that a mobile terminal is belonging to calls and communicates with the called user that a fixed terminal is belonging to, and a media gateway control equipment sends a detecting event of re-answer signal to a media processing equipment; S404, the fixed network in which the fixed terminal resides, when detecting that the called user hangs up, sends to the media processing equipment a message that the called user hangs up, and the media processing equipment sends the message that the called user hangs up to the media gateway control equipment; S406, after receiving the message that the called user hangs up, the media gateway control equipment does not release the call immediately, but in order to wait for the hang-up of the calling user, initiates a delay detecting process during which when receiving a re-answer message from the media processing equipment, the media gateway control equipment cancels the delay detecting process and makes the calling user to communicate with the called user; when the calling user does not hang up and the called user does not pick the phone, the media gateway control equipment releases the call as normal.

Meanwhile, the media gateway control equipment and the media processing equipment are separated with each other, between which a media gateway control protocol is employed. The TDM link is employed between the fixed network and the media processing equipment. A channel associated signaling protocol is used between the fixed network and the media processing equipment to carry out the voice call. The fixed network is a public switched telephone network. The method realizing a re-answer call according to the present invention can be deployed in the next generation core network.

The present invention provides a method for realizing a re-answer call in which TDM link and channel associated signaling protocol are employed between the fixed network and the media processing equipment of NGN to carry out the re-answer call.

### Description of the Drawings

The drawings illustrated here provide a further understanding of the present invention and form a part of the application, and the exemplary embodiments of the present invention and the description thereof are used to explain the present invention, rather than limit the present invention improperly, in which:
Figure 1 is a schematic processing chart for the re-answer call of a fixed network user in the related art;
Figure 2 is a schematic networking view when the fixed network accesses to the NGN core network in the related art;
Figure 3 is a schematic processing chart for the basic call that a mobile user makes to a fixed network user in the related art;
Figure 4 is a flow chart of a method for realizing a re-answer call according to the embodiment of the present invention; and
Figure 5 is a schematic flow chart of the method for realizing a re-answer call according to another embodiment of the present invention.

### Detailed Description of the Invention

A detailed description is given for the concrete embodiments of the present invention, referring to the figures.

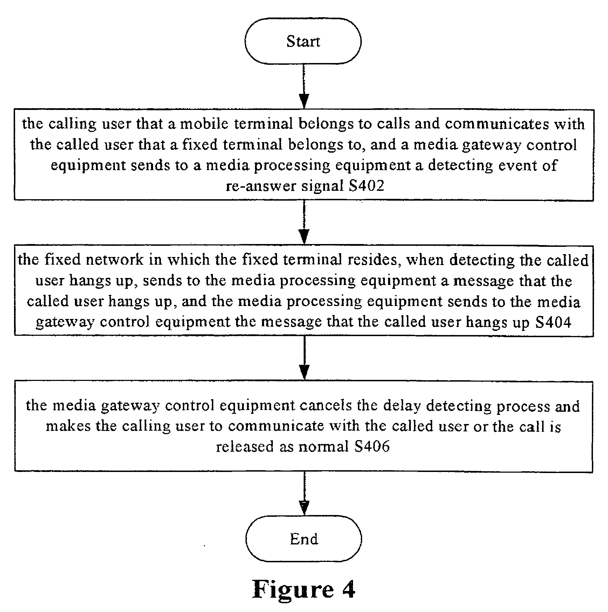

Referring to Figure 4, it is described the method for realizing a re-answer call according to the embodiment of the present invention. As shown in Figure 1, the method for realizing a re-answer call includes the following steps: S402, the calling user that a mobile terminal belongs to calls and communicates with the called user that a fixed terminal belongs to, and a media gateway control equipment sends to a media processing equipment a detecting event for re-answer signal; S404, the fixed network in which the fixed terminal resides, when detecting the called user hangs up, sends to the media processing equipment a message that the called user hangs up, and the media processing equipment sends the message that the called user hangs up to the media gateway control equipment; S406, after receiving the message that the called user hangs up, the media gateway control equipment does not release the call immediately, but in order to wait for the hang-up of the calling user, initiates a delay detecting process during which when receiving a re-answer message from the media processing equipment, the media gateway control equipment cancels the delay detecting process and makes the calling user to communicate with the called user; when the calling user does not hang up and the called user does not pick the phone, the media gateway control equipment releases the calling as normal.

Meanwhile, the media gateway control equipment and the media processing equipment are separated with each other, between which a media gateway control protocol is adopted The TDM link is employed between the fixed network and the media processing equipment. A channel associated signaling protocol is employed between the fixed network and the media processing equipment to carry out a voice call. The fixed network is a public switched telephone network. The method for realizing a re-answer call according to the present invention can be applied to the next generation core network.

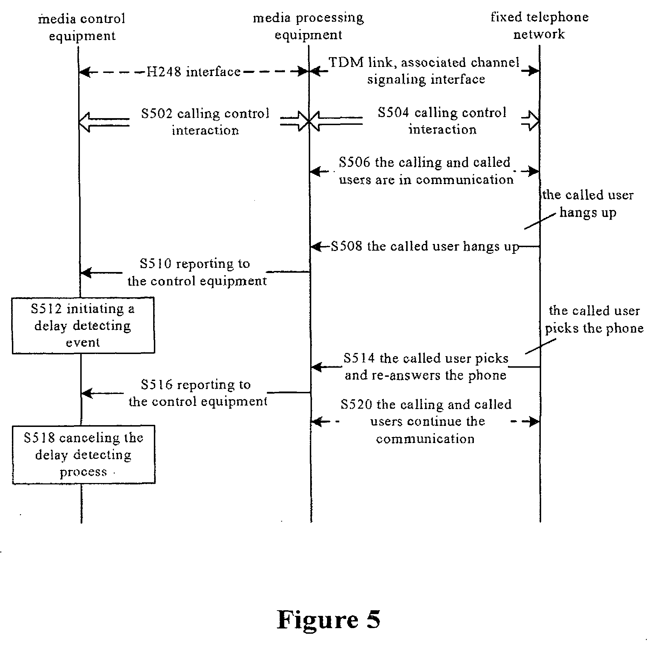

Referring to Figure 5, it is described the method for realizing a re-answer call according to another embodiment of the present invention. After the fixed network accesses in the NGN core network, when a mobile user of NGN calls a fixed network user, the fixed network user (if expecting) still can use the previous re-answer calling function, for which it needs to provide an interface between the media gateway control equipment and the corresponding media processing equipment to support the transfer of the re-answer signal, such that the media gateway control equipment can process the related calling. As shown in Figure 5, the concrete method for realizing a re-answer call comprises the following steps:
S502, the call controls are interacted, such that before the communication between the calling and called users, the media gateway control equipment initiates a re-answer signal detecting event to the media processing equipment, and therefore during the sequential call processing, the media processing equipment when detecting the re-answering, can report it to the media gateway control equipment.
S504, when preparing to establishing the calling, the media gateway control equipment and the media processing equipment exchange some information, including the preparation for calling resources, storing the information of the calling and called users etc; the fixed network finds out the idle called user after analysis and processing and reports it to the media processing equipment; the fixed network detects the called user picks and answers the phone and sends to the media processing equipment a message that the called user picks and answers the phone.
S506, the calling and called users are in communication with each other.
S508, the fixed network, when detecting that called user hangs up, sends to the media processing equipment the information that the called user hangs up.
S510, the media processing equipment sends to the media gateway control equipment a message including the related information that called user has hanged up the phone.
S512, after receiving the information that the called user has hanged up the phone, the media gateway control equipment initiates a delay detecting process to wait for the hang-up of the calling user with the length of the delay capable of be configured before the calling.
S514, during the delay detecting process, the fixed network, if detecting the called user picks the phone, sends to the media processing equipment a message that the called user re-answers the call.
S516, the media processing equipment sends to the media gateway control equipment a message including the related information that the called user picks and re-answers the phone.
S518, after receiving the information that the called user picks and re-answers the phone, the media gateway control equipment cancels the previous delay detecting process.
S520, the calling and called users can continue the communication.

Meanwhile, if the calling user does not hang up and the called user does not pick and re-answer the phone during the delay detecting process, the media gateway control equipment will perform the normal call-release process after the delay detection is over.

All in all, the present invention provides the function of the re-answer call of the fixed network user by exchanging the information related to the re-answer call between the media gateway control equipment and the media processing equipment, wherein the exchanging of the information related to the re-answer call comprises the following steps: a media gateway control equipment sends a detecting event of re-answer signal to a media processing equipment through the control interface therebetween; the media processing equipment detects the re-answer signal from the fixed network and transmits the signal through the control interface with the media gateway control equipment; after receiving the message that the called user hangs up which is reported from the media process equipment, the media gateway control equipment can not release the call immediately, but initiates a delay detecting process to wait for the hang-up of the calling user; and when the media gateway control equipment receives a message that the called user re-answers the phone which is reported from the media processing equipment, the delay detecting process previously initiated is cancelled and the calling user can communicate with the called user again; and during the delay detecting process, when the calling user does not hang up and the called user does not pick the phone, the media gateway control equipment releases the call as per the normal call-release process after the delay is over.

The embodiment of the present invention is described for the purpose of illustration, not for limiting the present invention. For those skilled in the art, various alterations and modifications can be made to the present invention. Any alterations, substitutions and modifications falling into the principle of the present invention shall be protected by the claims of the present invention.

## Claims

1. A method for realizing a re-answer call, the method is applicable to the next generation core network, which including the following steps:
S402, the calling user that a mobile terminal belongs to calls and communicates with the called user that a fixed terminal belongs to, and a media gateway control equipment sends to a media processing equipment a detecting event of re-answer signal;
S404, the fixed network in which the fixed terminal resides, when detecting the called user hangs up, sends to the media processing equipment a message that the called user hangs up, and the media processing equipment sends to the media gateway control equipment the message that the called user hangs up; and
S406, after receiving the message that the called user hangs up, the media gateway control equipment does not release the call immediately, but in order to wait for the hang-up of the calling user, initiates a delay detecting process during which when receiving a re-answer message from the media processing equipment, the media gateway control equipment cancels the delay detecting process and makes the calling user to communicate with the called user;
wherein a media gateway control protocol is employed between the media gateway control equipment and the media processing equipment.

2. The method for realizing a re-answer call according to Claim 1, **characterized in that** in the Step S406, during the delay detecting process, when the calling user does not hangs up and the called user does not pick the phone, the media gateway control equipment releases the call.

3. The method for realizing a re-answer call according to Claim 1, **characterized in that** the media gateway control equipment is separated from the media processing equipment.

4. The method for realizing a re-answer call according to any of Claims 1 to 3, **characterized in that** a TDM link is employed between the fixed network and the media processing equipment.

5. The method for realizing a re-answer call according to Claim 4, **characterized in that** a channel associated signaling protocol is employed between the fixed network and the media processing equipment to carry out a voice call.

6. The method for realizing a re-answer call according to Claim 4, **characterized in that** the fixed network is a public switched telephone network.

## Patentansprüche

1. Verfahren zur Realisierung der Neuentgegennahme eines Anrufs, das für das Kernnetz der nächsten Generation anwendbar ist, **gekennzeichnet durch** die folgenden Schritte:
S402: der anrufende Benutzer, dem ein Mobiltelefon gehört, ruft an und kommuniziert mit dem angerufenen Benutzer, dem ein Festanschluß gehört, und eine mediale Zugangssteuereinrichtung sendet an eine mediale Prozeßeinrichtung ein Erkennungssignal für die Neuentgegennahme eines Anrufs;
S404: das Festnetz, in dem sich der Festanschluß befindet, sendet, wenn festgestellt wird, daß der angerufene Benutzer nicht abhebt, an die mediale Prozeßeinrichtung eine Nachricht, daß der angerufene Benutzer nicht abhebt, und die mediale Prozeßeinrichtung sendet an die mediale Zugangssteuereinrichtung die Nachricht, daß der angerufene Benutzer nicht abhebt;
und
S406: nach dem Empfang der Nachricht, daß der angerufene Benutzer nicht abhebt, gibt die mediale Zugangssteuereinrichtung den Anruf nicht sofort frei, sondern startet, um auf das Abheben des angerufenen Benutzers zu warten, ein Verzögerungsermittlungsverfahren, während dessen die mediale Zugangssteuereinrichtung, sobald sie von der medialen Prozeßeinrichtung eine Nachricht über die Neuentgegennahme erhält, das Verzögerungsermittlungsverfahren absetzt und den anrufenden Benutzer veranlaßt, mit dem angerufenen Benutzer zu kommunizieren, wobei zwischen der medialen Zugangssteuereinrichtung und der medialen Prozeßeinrichtung ein mediales Zugangssteuerprotokoll benutzt wird.

2. Verfahren zur Realisierung der Neuentgegennahme eines Anrufs nach Anspruch 1, **dadurch gekennzeichnet, daß** in dem Schritt S406 während des Verzögerungsermittlungsverfahrens die mediale Zugangssteuereinrichtung den Anruf freigibt, wenn der anrufende Benutzer nicht auflegt und der angerufene Benutzer das Telefon nicht aufnimmt.

3. Verfahren zur Realisierung der Neuentgegennahme eines Anrufs nach Anspruch 1, **dadurch gekennzeichnet, daß** die mediale Zugangssteuereinrichtung von der medialen Prozeßeinrichtung getrennt ist.

4. Verfahren zur Realisierung der Neuentgegennahme eines Anrufs nach einem der Ansprüche 1 bis 3, **dadurch gekennzeichnet, daß** zwischen dem Festnetz und der medialen Prozeßeinrichtung ein TDM-Link verwendet wird.

5. Verfahren zur Realisierung der Neuentgegennahme eines Anrufs nach Anspruch 4, **dadurch gekennzeichnet, daß** zwischen dem Festnetz und der medialen Prozeßeinrichtung zur Durchführung eines akustischen Anrufs ein einem Kanal zugeordnetes Signalisierungsprotokoll verwendet wird.

6. Verfahren zur Realisierung der Neuentgegennahme eines Anrufs nach Anspruch 4, **dadurch gekennzeichnet, daß** das Festnetz ein öffentliches Telefonnetz ist.

## Revendications

1. Procédé pour réaliser un appel de nouvelle réponse, le procédé est applicable au réseau coeur de prochaine génération, qui comprend les étapes suivantes :
S402, l'utilisateur appelant auquel un terminal mobile appartient appelle et communique avec l'utilisateur appelé auquel un terminal fixe appartient, et un équipement de contrôle de passerelle de média envoie à un équipement de traitement de média un événement de détection de signal de nouvelle réponse ;
S404, le réseau fixe dans lequel le terminal fixe réside, lors de la détection que l'utilisateur appelé raccroche, envoie à l'équipement de traitement de média un message selon lequel l'utilisateur appelé raccroche, et l'équipement de traitement de média envoie à l'équipement de contrôle de passerelle de média le message selon lequel l'utilisateur appelé raccroche ;
et
S406, après la réception du message selon lequel l'utilisateur appelé raccroche, l'équipement de contrôle de passerelle de média ne libère pas l'appel immédiatement, mais afin d'attendre le raccrochage de l'utilisateur appelant, initie un processus de détection de retard au cours duquel lors de la réception d'un message de nouvelle réponse en provenance de l'équipement de traitement de média, l'équipement de contrôle de passerelle de média annule le processus de détection de retard et amène l'utilisateur appelant à communiquer avec l'utilisateur appelé ;
dans lequel un protocole de contrôle de passerelle de média est employé entre l'équipement de contrôle de passerelle de média et l'équipement de traitement de média.

2. Procédé pour réaliser un appel de nouvelle réponse selon la revendication 1, **caractérisé en ce qu'**à l'Etape S406, pendant le processus de détection de retard, lorsque l'utilisateur appelant ne raccroche pas et que l'utilisateur appelé ne décroche pas le téléphone, l'équipement de contrôle de passerelle de média libère l'appel.

3. Procédé pour réaliser un appel de nouvelle réponse selon la revendication 1, **caractérisé en ce que** l'équipement de contrôle de passerelle de média est séparé de l'équipement de traitement de média.

4. Procédé pour réaliser un appel de nouvelle réponse selon l'une quelconque des revendications 1 à 3, **caractérisé en ce qu'**une liaison TDM est employée entre le réseau fixe et l'équipement de traitement de média.

5. Procédé pour réaliser un appel de nouvelle réponse selon la revendication 4, **caractérisé en ce qu'**un protocole de signalisation voie par voie est employé entre le réseau fixe et l'équipement de traitement de média pour effectuer un appel vocal.

6. Procédé pour réaliser un appel de nouvelle réponse selon la revendication 4, **caractérisé en ce que** le réseau fixe est un réseau téléphonique public commuté.
